# EUROPEAN PATENT SPECIFICATION

(11) **EP 2 910 601 B1**
(45) Date of publication and mention of the grant of the patent: **11.05.2016**
(21) Application number: 14190950.7
(22) Date of filing: 29.10.2014
(51) Int. Cl.: C08L 7/00, B60C 19/08, B60C 1/00, C08L 9/00, C08J 3/22

(54) **Rubber composition for fiber ply cord topping, pneumatic tire, and method for manufacturing rubber composition for fiber ply cord topping**
Kautschukzusammensetzung für Faserlagenauflagen, Luftreifen und Verfahren zur Herstellung der Kautschukzusammensetzung für Faserlagenkordauflage
Composition de caoutchouc pour nappage de cordon de pli de fibre, pneumatique et procédé de fabrication de ladite composition

(30) Priority: 29.01.2014 JP 2014014623
(43) Date of publication of application: 26.08.2015
(73) Proprietor: SUMITOMO RUBBER INDUSTRIES, LTD., Hyogo-ken (JP)
(72) Inventor: Miyazaki, Tatsuya, Kobe-shi, Hyogo 651-0072 (JP); Ishino, Soh, Kobe-shi, Hyogo 651-0072 (JP); Yamana, Ayuko, Kobe-shi, Hyogo 651-0072 (JP)
(74) Representative: Manitz, Finsterwald & Partner GbR

(56) References cited:
- EP-A1- 0 870 796
- EP-A1- 2 072 280
- EP-A1- 2 153 965
- EP-A1- 2 481 560
- EP-A2- 1 085 046
- US-A1- 2009 126 844
- US-A1- 2010 071 817
- US-A1- 2013 180 637

## Description

### TECHNICAL FIELD

The present invention relates to a rubber composition for a fiber ply cord topping, a pneumatic tire including the rubber composition, and a method for manufacturing the rubber composition for a fiber ply cord topping.

### BACKGROUND ART

Attempts have been made to reduce the rolling resistance of tires to improve the fuel consumption of vehicles during driving. Tires with better fuel economy have recently become increasingly desired, and various techniques have thus been proposed, such as reducing the heat build-up of a rubber used as a tread and even the heat build-up of rubbers used as a sidewall and insulation, or reducing the weight of a tire for example by reducing the thickness of a sidewall rubber.

In order to achieve reduction in the heat build-up of a rubber, a technique of reducing the filling ratio of carbon black and a technique of reducing energy loss by incorporating a filler such as silica have been used. These techniques can reduce the rolling resistance of tires, but are causing the problem of increased electrical resistance of tires because, for example, the amount of carbon black with good conductivity is reduced or the amount of silica with low conductivity is increased. The increase in the electrical resistance of tires may lead to radio noise, or may cause electrical discharge during fueling, which could ignite gasoline or electrically shock human bodies.

Meanwhile, a conventionally used method for suppressing an increase in the electrical resistance of a tire is to form a conductive path from the road surface to a rim using highly conductive rubber components, as taught in, for example, Patent Literature 1. Specifically, for example, as illustrated in Fig. 1, (1) a conducting rubber, (2) a breaker, (3) an insulation, an innerliner, a carcass and/or a sidewall, and (4) a clinch are formed of highly conductive rubber components; the conducting rubber is embedded in a tread so that it comes into contact with the road surface. With these, a conductive path is formed to extend from the conducting rubber through the breaker, from the breaker through the insulation, innerliner, carcass and/or sidewall, and from these components to the clinch that is in contact with a rim. Thus, a conductive path can be formed to extend from the road surface to the rim via (1) the conducting rubber, (2) the breaker, (3) the insulation, innerliner, carcass and/or sidewall, and (4) the clinch, so that the static electricity accumulated in the tire can be discharged. In this case, an undertread or a jointless band may also be formed of a highly conductive rubber component and used to further form a conductive path between the components (1) and (2) via the undertread, base tread, or jointless band.

As for the components (3) in the above conductive path, it suffices if at least one of these components is formed of a highly conductive rubber component. Of the components (3), the sidewall best contributes to a reduction in the rolling resistance of a tire, and the insulation is not required in every tire or in every site between the tread crown and the bead portion; therefore, these components are considered to be unsuitable as components for ensuring conductivity. The present inventors have eventually concluded that it is effective to ensure good conductivity in a carcass topping or, in other words, to form a conductive path by providing high conductivity to a fiber ply cord topping rubber to be used in a carcass.

A known technique for providing conductivity to a rubber composition is to add conductive carbon black such as Ketjenblack EC300J (available from Mitsubishi Chemical Corporation). Conductive carbon black, however, is a material usually used as, for example, a conductive coating material, conductive toner, or electrode material for batteries, and is unfortunately too expensive to be used in tires.

In this context, Lion Corporation started marketing an inexpensive conductive carbon black under the trade name of Lionite. This created an expectation that adding the conductive carbon black to a rubber composition for a fiber ply cord topping to be used in a carcass would provide good conductivity. Yet, in the course of development of fuel efficient tires, it was found that in the case where a sidewall having a high electrical resistance and a lower carbon black content was used together with a rubberized ply fabric having a small cord diameter and a high end count and also having a single-ply structure, sufficient conductivity could not be achieved and the conductive path was not sufficiently formed in some cases.

### CITATION LIST

### PATENT LITERATURE

Patent Literature 1: JP 2013-49418 A

### SUMMARY OF INVENTION

### TECHNICAL PROBLEM

In a rubberized ply fabric having a small cord diameter and a high end count, the amount of topping with the fiber ply cord topping rubber is small. In the case where the amount of topping rubber is small, the electrical resistance of the sidewall portion may significantly increase. This is considered to be a cause of poor conductivity.

As a possible measure against the above problem, the amount of topping rubber may be increased for example by thickening the topping rubber, or employing a double-ply structure. Yet, the increase in the amount of topping rubber is contrary to the goal of improved fuel economy of tires. In addition, it may also be contemplated to increase the conductive carbon black content in the topping rubber. Unfortunately, however, properties required for tires, including elongation at break, will be reduced if the conductive carbon black content is increased.

This has created a demand for a fiber ply cord topping rubber capable of exhibiting sufficient conductivity even when the amount of topping rubber is small and of sufficiently ensuring tire properties such as elongation at break.

The present invention aims to solve the above problems and provide a rubber composition for a fiber ply cord topping, a fiber ply cord topping rubber, a pneumatic tire formed therefrom, and a method for manufacturing the rubber composition for a fiber ply cord topping, which make it possible to provide good conductivity to even fuel efficient and lightweight pneumatic tires.

### SOLUTION TO PROBLEM

As a result of extensive studies, the present inventors have found that a rubber composition for a fiber ply cord topping including an isoprene-based rubber, styrene butadiene rubber (SBR), and a conductive carbon black having a dibutyl phthalate oil absorption of 300 ml/100 g or more can exhibit very high conductivity, and that the use of the rubber composition for a fiber ply cord topping allows sufficient conductivity even when the amount of topping rubber is small, and can therefore provide pneumatic tires that are excellent in tire weight, durability, and fuel economy. The present invention has been accomplished based on these findings. Further, the present inventors have found that particularly high and stable conductivity can be obtained in the case where the conductive carbon black is added to the rubber composition by a method in which a masterbatch containing SBR and the conductive carbon black is prepared, and then the masterbatch is kneaded with other components.

Since SBR has styrene groups and exhibits electron-withdrawing properties on a carbon graphite layer, it easily incorporates carbon black by nature. When SBR and the conductive carbon black were used in combination, the conductive carbon black was unevenly distributed towards the SBR phase in the fiber ply cord topping rubber so that a conductive path was formed, and therefore high conductivity was achieved, even when the amount of topping rubber was small.

The present invention relates to a rubber composition for a fiber ply cord topping, including: a rubber component including an isoprene-based rubber and styrene butadiene rubber; and a conductive carbon black having a dibutyl phthalate oil absorption of 300 ml/100 g or more, wherein an amount of the isoprene-based rubber is 20 to 80% by mass and an amount of the styrene butadiene rubber is 20 to 60% by mass, each based on 100% by mass of the rubber component, and an amount of the conductive carbon black is 1 to 10 parts by mass per 100 parts by mass of the rubber component.

Preferably, the conductive carbon black has a nitrogen adsorption specific surface area (N₂SA) of 900 m²/g or more, and the amount of the conductive carbon black is 1 to 3 parts by mass per 100 parts by mass of the rubber component.

The conductive carbon black is preferably added in the form of a masterbatch containing the styrene butadiene rubber and the conductive carbon black.

The masterbatch preferably contains conventional carbon black.

The masterbatch preferably contains process oil.

Preferably, the masterbatch contains, per 100 parts by mass of the styrene butadiene rubber, 2 to 10 parts by mass of the conductive carbon black and 5 to 50 parts by mass of the process oil when the masterbatch is prepared.

The rubber composition for a fiber ply cord topping preferably contains 2.5 to 3.0 parts by mass of sulfur per 100 parts by mass of the rubber component.

The present invention also relates to a pneumatic tire including a rubberized fiber ply cord component formed from the rubber composition for a fiber ply cord topping.

The rubberized fiber ply cord component of the pneumatic tire is preferably at least one of a carcass and a jointless band.

In the pneumatic tire, a sidewall preferably has an electrical resistance of 1 × 10⁹ Ω or more.

The present invention also relates to a method for manufacturing a rubber composition for a fiber ply cord topping, the rubber composition including: a rubber component including an isoprene-based rubber and styrene butadiene rubber; and a conductive carbon black having a dibutyl phthalate oil absorption of 300 ml/100 g or more, wherein an amount of the isoprene-based rubber is 20 to 80% by mass and an amount of the styrene butadiene rubber is 20 to 60% by mass, each based on 100% by mass of the rubber component, and an amount of the conductive carbon black is 1 to 10 parts by mass per 100 parts by mass of the rubber component, the method including the steps of: preparing a masterbatch containing the styrene butadiene rubber and the conductive carbon black; and kneading the masterbatch with the isoprene-based rubber and other chemicals, or with the isoprene-based rubber, a rubber other than the isoprene-based rubber, and other chemicals.

### ADVANTAGEOUS EFFECTS OF INVENTION

The rubber composition for a fiber ply cord topping of the present invention includes a rubber component including an isoprene-based rubber and styrene butadiene rubber, and a conductive carbon black having a dibutyl phthalate oil absorption of 300 ml/100 g or more, wherein the amount of the isoprene-based rubber is 20 to 80% by mass and the amount of the styrene butadiene rubber is 20 to 60% by mass, each based on 100% by mass of the rubber component, and the amount of the conductive carbon black is 1 to 10 parts by mass per 100 parts by mass of the rubber component. Thus, the rubber composition can exhibit sufficient conductivity even when the amount of topping rubber is small. The use of the rubber composition for a fiber ply cord topping can therefore provide pneumatic tires that are excellent in tire weight, durability, and fuel economy.

### BRIEF DESCRIPTION OF DRAWINGS

Fig. 1 is a schematic view illustrating a conductive path in a tire.
Fig. 2 is a schematic view illustrating examples of forms of conductive carbon black and conventional carbon black present in a rubber composition.
Fig. 3 is a cross-sectional view illustrating a part of a pneumatic tire according to an embodiment of the present invention.

### DESCRIPTION OF EMBODIMENTS

The rubber composition for a fiber ply cord topping of the present invention (hereinafter also referred to simply as "rubber composition") contains an isoprene-based rubber as the rubber component.

Examples of the isoprene-based rubbers include polyisoprene rubber (IR), natural rubber (NR), highly purified natural rubber (UPNR), and epoxidized natural rubber (ENR). NR is preferred among these because it is excellent in tire durability, adhesion to fiber ply cords, and the like. NRs commonly used in the tire industry, such as SIR20, RSS#3, and TSR20, can be used. Any IR can be used, such as those commonly used in the tire industry.

The amount of isoprene-based rubber based on 100% by mass of the rubber component is 20% by mass or more, preferably 40% by mass or more. If the amount is less than 20% by mass, the resulting elongation at break, fuel economy, adhesion to fiber ply cords, processability, and eventually the tire durability may be insufficient. Also, the amount of isoprene-based rubber is 80% by mass or less, preferably 70% by mass or less. If the amount is more than 80% by mass, the resulting handling stability and reversion resistance may be insufficient.

The rubber composition of the present invention contains SBR as the rubber component. Since SBR has styrene groups and exhibits electron-withdrawing properties on a carbon graphite layer, it easily incorporates carbon black by nature. The SBR used in the rubber composition of the present invention has a role in incorporating conductive carbon black into the phase thereof to thereby unevenly distribute the conductive carbon black theretowards. Thus, conductive carbon black and conventional carbon black are unevenly distributed towards the SBR phase so that a conductive path is formed. This allows to achieve high conductivity even when the amount of topping rubber is smaller or the conductive carbon black content is lower.

Any SBR can be used, such as those commonly used in the tire industry, including emulsion-polymerized styrene butadiene rubber (E-SBR) and solution-polymerized styrene butadiene rubber (S-SBR).

The amount of SBR based on 100% by mass of the rubber component is 20% by mass or more, preferably 25% by mass or more. If the amount is less than 20% by mass, then the conductive carbon black may not be sufficiently unevenly distributed, and therefore the effect of improving conductivity may not be obtained. In addition, the resulting reversion resistance may be insufficient, eventually resulting in insufficient handling stability and elongation at break. Also, the amount of SBR is 60% by mass or less, preferably 40% by mass or less. If the amount is more than 60% by mass, the resulting elongation at break, fuel economy, processability, and eventually the tire durability may be insufficient.

The rubber component of the rubber composition of the present invention may include a rubber other than the isoprene-based rubber and SBR. Examples of the other rubbers include diene rubbers such as polybutadiene rubber (BR).

The rubber composition of the present invention contains a conductive carbon black having a dibutyl phthalate oil absorption of 300 ml/100 g or more. This provides good conductivity, and the effects of the present invention can therefore be well achieved.

Any conductive carbon black can be used as long as it has the above properties. Examples thereof include Lionite available from Lion Corporation, and Ketjenblack EC600JD and EC300JD available from Lion Corporation, and the like.

The dibutyl phthalate oil absorption (DBP) of conductive carbon black is 300 ml/100 g or more, preferably 320 ml/100 g or more, and more preferably 340 ml/100 g or more. If the DBP is less than 300 ml/100 g, sufficient conductivity cannot be provided. Also, the DBP of conductive carbon black is preferably 600 ml/100 g or less, more preferably 500 ml/100 g or less, and still more preferably 400 ml/100 g or less. If the DBP is more than 600 ml/100 g, the dispersibility of conductive carbon black, processability, and fuel economy may decrease.

Herein, the DBP of carbon black is measured in accordance with JIS K 6217-4:2001.

The nitrogen adsorption specific surface area (N₂SA) of conductive carbon black is preferably 700 m²/g or more, more preferably 800 m²/g or more, still more preferably 900 m²/g or more, and particularly preferably 1000 m²/g or more. If the N₂SA is less than 700 m²/g, sufficient conductivity may not be provided. Also, in the case where the conductive carbon black having a N₂SA of 900 m²/g or more (preferably 1000 m²/g or more) is used, sufficient conductivity can be obtained even when the amount of conductive carbon black is 7 parts by mass or less per 100 parts by mass of the rubber component, which allows tire properties, such as elongation at break, to be sufficiently achieved. The N₂SA is preferably 1500 m²/g or less, more preferably 1300 m²/g or less, still more preferably 1200 m²/g or less, and particularly preferably 1100 m²/g or less. If the N₂SA is more than 1500 m²/g, the resulting dispersibility of conductive carbon black, processability, and fuel economy may be insufficient.

Herein, the N₂SA of carbon black is determined in accordance with JIS K 6217-2:2001.

The amount of conductive carbon black per 100 parts by mass of the rubber component is 1 part by mass or more, preferably 1.2 parts by mass or more, and more preferably 1. 5 parts by mass or more. If the amount is less than 1 part by mass, sufficient conductivity cannot be provided when the conductive carbon black is used in combination with, for example, 40 to 47 parts by mass of DIABLACK N330 (DBP: 102 ml/100 g; N₂SA: 78 m²/g; available from Mitsubishi Chemical Corporation), a conventional carbon black, as described later. Also, the amount of conductive carbon black is 10 parts by mass or less, preferably 8 parts by mass or less, more preferably 5 parts by mass or less, and still more preferably 3 parts by mass or less. If the amount is more than 10 parts by mass, fuel economy, elongation at break, adhesion to fiber ply cords, and eventually tire durability will decrease. When the amount of conductive carbon black is 3 parts by mass or less, particularly excellent elongation at break can be achieved.

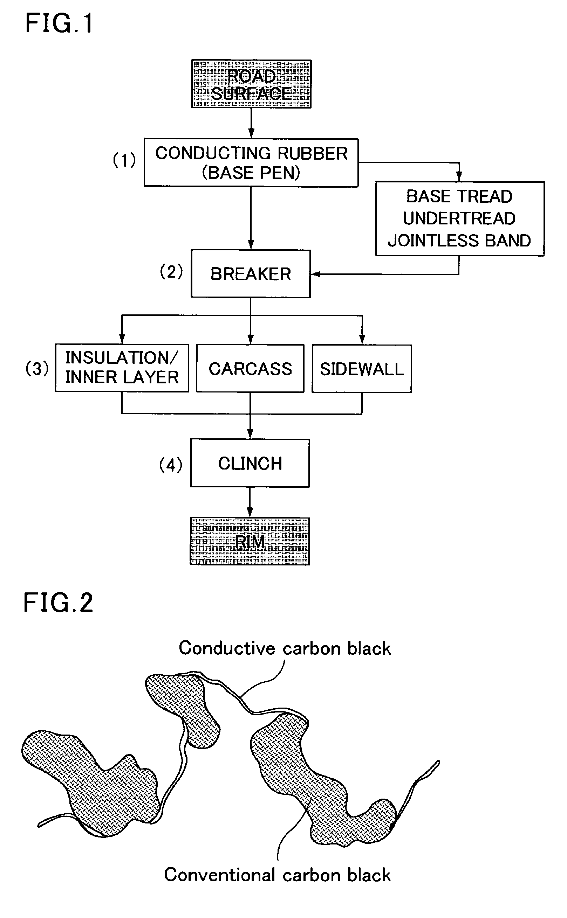

The rubber composition of the present invention preferably contains, in addition to the conductive carbon black, carbon black other than the conductive carbon black (hereinafter also referred to as "conventional carbon black"). This can provide good reinforcement and synergistically improve the balance of properties of the fiber ply cord topping rubber. Therefore, the effects of the present invention can be well achieved. Further, when the conductive carbon black is used together with conventional carbon black, the use of only a small amount of conductive carbon black can suitably provide conductivity. This is presumably because the long-linked conductive carbon black acts as a bridge among aggregates of conventional carbon black (see Fig. 2).

The nitrogen adsorption specific surface area (N₂SA) of conventional carbon black is preferably 25 m²/g or more, and more preferably 60 m²/g or more. If the N₂SA is less than 25 m²/g, the resulting elongation at break and handling stability may be insufficient. The N₂SA is preferably 120 m²/g or less, and more preferably 100 m²/g or less. If the N₂SA is more than 120 m²/g, the resulting fuel economy may be insufficient.

The dibutyl phthalate oil absorption (DBP) of conventional carbon black is preferably 50 ml/100 g or more, and more preferably 85 ml/100 g or more. If the DBP is less than 50 ml/100 g, the resulting reinforcement and conductivity may be insufficient. Also, the DBP of conventional carbon black is preferably 200 ml/100 g or less, and more preferably 135 ml/100 g or less. If the DBP is more than 200 ml/100 g, processability may decrease.

The amount of conventional carbon black per 100 parts by mass of the rubber component is preferably 20 parts by mass or more, more preferably 30 parts by mass or more, still more preferably 35 parts by mass or more, and particularly preferably 40 parts by mass or more. Also, the amount of conventional carbon black is preferably 70 parts by mass or less, more preferably 60 parts by mass or less, and still more preferably 50 parts by mass or less. When the amount of conventional carbon black falls within the range mentioned above, pneumatic tires that are particularly excellent in fuel economy and durability can be obtained. In addition, when the amount of conventional carbon black falls within the range mentioned above, pneumatic tires having good properties while ensuring good conductivity can be obtained, even when the amount of conductive carbon black is 5 parts by mass or less (preferably 3 parts by mass or less).

The rubber composition of the present invention may contain silica. This can provide good reinforcement, and can suitably prevent blooming of sulfur added as a vulcanizing agent by adsorbing the sulfur, thus synergistically improving fuel economy, elongation at break, adhesion to fiber ply cords, and processability. Therefore, the effects of the present invention can be more suitably achieved.

Any silica can be used. Examples thereof include dry silica (silica anhydride) and wet silica (hydrous silica). Wet silica is preferred because it has many silanol groups.

The nitrogen adsorption specific surface area (N₂SA) of silica is preferably 100 m²/g or more, and more preferably 110 m²/g or more. If the N₂SA is less than 100 m²/g, elongation at break tends to decrease. The N₂SA is preferably 250 m²/g or less, and more preferably 230 m²/g or less. If the N₂SA is more than 250 m²/g, fuel economy and processability tend to decrease.

The N₂SA values of silica are determined by the BET method in accordance with ASTM D3037-93.

The amount of silica per 100 parts by mass of the rubber component is preferably 3 parts by mass or more. If the amount of silica is less than 3 parts by mass, this may not be sufficiently effective in improving elongation at break. The amount of silica is preferably 50 parts by mass or less, more preferably 30 parts by mass or less, and still more preferably 15 parts by mass or less. More than 50 parts by mass of silica may lead to reduction in conductivity and processability (e.g., shrink of the rubberized fabric) (or, in this case, the formulation cost may be increased because at least 7 parts by mass of conductive carbon black will be necessary).

The proportion of carbon black based on 100% by mass in total of silica and carbon black (a total of conductive carbon black and conventional carbon black) is preferably 50% by mass or more, more preferably 60% by mass or more, and still more preferably 70% by mass or more. The upper limit of the proportion of carbon black is not particularly limited and may be 100% by mass. If the proportion falls within the range mentioned above, the resulting rubber composition can have an excellent balance of properties.

The rubber composition of the present invention preferably contains sulfur as a vulcanizing agent.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combination of two or more.

The amount of sulfur per 100 parts by mass of the rubber component is preferably 2. 5 parts by mass or more. If the amount is less than 2.5 parts by mass, the resulting hardness (Hs) after vulcanization may be insufficient and co-crosslinking with adjacent rubber compounds may not be sufficiently made. The amount of sulfur is preferably 3.0 parts by mass or less. If the amount is more than 3.0 parts by mass, crack growth resistance, ozone resistance, elongation at break, and durability may become poor.

Besides sulfur, the present invention may use an alkylphenol-sulfur chloride condensate (for example, Tackirol V200 available from Taoka Chemical Co., Ltd.) as a vulcanizing agent.

The rubber composition of the present invention preferably contains a vulcanization accelerator. Examples of the vulcanization accelerators include guanidine compounds, aldehyde-amine compounds, aldehyde-ammonia compounds, thiazole compounds, sulfenamide compounds, thiourea compounds, thiuram compounds, dithiocarbamate compounds, and xanthate compounds. These vulcanization accelerators may be used alone or in combination of two or more. Preferred among these in view of obtaining good adhesion to fiber cords are sulfenamide vulcanization accelerators (such as N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and N,N-diisopropyl-2-benzothiazole sulfenamide (TBSI)), with TBBS and CBS being more preferred.

The amount of vulcanization accelerator per 100 parts by mass of the rubber component is preferably 0.3 parts by mass or more, more preferably 0.5 parts by mass or more, and still more preferably 0.8 parts by mass or more. If the amount is less than 0.3 parts by mass, the resulting handling stability and adhesion to fiber ply cords may be insufficient. The amount is preferably 4.0 parts by mass or less, more preferably 3.0 parts by mass or less, still more preferably 2.0 parts by mass or less, and particularly preferably 1. 5 parts by mass or less. If the amount is more than 4.0 parts by mass, adhesion to fiber ply cords (particularly after hygrothermal aging) and elongation at break tend to decrease.

The rubber composition of the present invention preferably contains a softener. In the present invention, the term "softener" refers to process oils, C5 petroleum resins, and C9 petroleum resins. In the present invention, the softeners do not include crosslinkable resins (resorcinol resins, phenol resins, and alkylphenol resins).

The "process oil" refers to petroleum oils that are provided separately from the rubber component and other components and used in order to improve rubber processability (such as softening effect, additive dispersing effect, and lubricating effect between polymer chains), and examples thereof include paraffinic oils, naphthenic oils, and aromatic oils.

The process oils do not include oils pre-mixed in other components such as hexamethylol melamine pentamethyl ether (HMMPME), insoluble sulfur, and oil-extended rubber.

Examples of the C5 petroleum resins include aliphatic petroleum resins made mainly from olefins and diolefins in C5 fraction obtained by naphtha cracking. Examples of the C9 petroleum resins include aromatic petroleum resins made mainly from vinyltoluene, indene, and methylindene in C9 fraction obtained by naphtha cracking.

The C5 and C9 petroleum resins preferably have a softening point of 50°C or higher, more preferably 80°C or higher. Also, the softening point is preferably 150°C or lower, and more preferably 130°C or lower. When the softening point falls within the range mentioned above, pneumatic tires having good properties can be obtained.

The amount of softener per 100 parts by mass of the rubber component is preferably 20 parts by mass or less, more preferably 15 parts by mass or less, and still more preferably 12 parts by mass or less. If the amount is more than 20 parts by mass, the oil tends to cover the fiber ply cords, thereby deteriorating the adhesion of the rubber to the fiber ply cords after vulcanization. Additionally, the oil may migrate to the sidewall rubber and then soften the sidewall, thus decreasing handling stability. Furthermore, an excessive amount of softener may induce blooming of sulfur. The lower limit of the amount of softener is not particularly limited. Yet, in view of processability, the lower limit is preferably at least 1 part by mass, and more preferably at least 5 parts by mass.

The rubber composition of the present invention preferably contains an antioxidant. This can suppress thermo-oxidative degradation of polymers. It should be noted that in the case where a sufficient amount of antioxidant is contained in adjacent rubber components, sidewall, tie gum, cushion, clinch and the like, the antioxidant will migrate into the carcass rubber during vulcanization. In this case, an antioxidant does not need to be added.

The amount of antioxidant per 100 parts by mass of the rubber component is preferably 0.5 parts by mass or more, and more preferably 0.7 parts by mass or more. Also, the amount is preferably 3.0 parts by mass or less, and more preferably 2.0 parts by mass or less. When the amount falls within the range mentioned above, thermo-oxidative degradation can be suppressed even under high temperature use conditions as in the case of light trucks and the like.

The rubber composition of the present invention preferably contains zinc oxide as a vulcanization activator. This can improve adhesion to fiber ply cords, handling stability, fuel economy, elongation at break, and reversion resistance. Additionally, the zinc oxide in the kneaded rubber compound (during kneading) temporarily adsorbs sulfur and serves as a sulfur storage, and thus can reduce blooming of sulfur, suppressing a decrease in adhesion to fiber ply cords caused by the blooming of sulfur, and eventually a decrease in tire durability.

The zinc oxide may be one conventionally used in the rubber industry, and specific examples include zinc oxides #1 and #2 available from MITSUI MINING & SMELTING CO., LTD.

The amount of zinc oxide per 100 parts by mass of the rubber component is preferably 1.0 part by mass or more, more preferably 1.6 parts by mass or more, still more preferably 2.0 parts by mass or more, particularly preferably 2.2 parts by mass or more, further more preferably 2.5 parts by mass or more, and most preferably 2.7 parts by mass or more. If the amount is less than 1.0 part by mass, sulfur is likely to bloom, thereby decreasing handling stability, fuel economy, elongation at break, adhesion to fiber ply cords, reversion resistance, and eventually tire durability. Also, the amount of zinc oxide is preferably 16.0 parts by mass or less, more preferably 12.0 parts by mass or less, still more preferably 8.0 parts by mass or less, particularly preferably 6.0 parts by mass or less, further more preferably 5.0 parts by mass or less, and most preferably 4.0 parts by mass or less. If the amount is more than 16.0 parts by mass, the environment and cost tend to be adversely affected by the zinc oxide.

The ratio of the zinc oxide content to the total net sulfur content is preferably 0.50 or higher, more preferably 0.70 or higher, still more preferably 0.80 or higher, and particularly preferably 0.90 or higher. If the ratio is lower than 0.50, sulfur is likely to bloom, which may decrease processability (extrusion processability), adhesion to fiber ply cords (particularly after hygrothermal aging), elongation at break (particularly after dry heat aging), and eventually tire durability.

The ratio is preferably 4.00 or lower, more preferably 3.00 or lower, still more preferably 2.00 or lower, particularly preferably 1.70 or lower, and most preferably 1.50 or lower. If the ratio is higher than 4.00, then sulfur can be more suitably prevented from blooming, which is a property advantage; however, undispersed aggregates of zinc oxide, if formed, may act as fracture nuclei under tension, resulting in reduced elongation at break. In addition, the presence of a large amount of zinc oxide whose unit price and specific gravity are high may lead to increase in cost and tire weight (tires having poor fuel economy).

When the above-mentioned ratio is satisfied, the zinc oxide can be prevented from acting as fracture nuclei, and thus good elongation at break and eventually good tire durability can be achieved.

The rubber composition of the present invention may contain a crosslinkable resin.

Examples of the crosslinkable resins include, but not limited to, those commonly used in the tire industry, such as resorcinol resins, phenol resins, and alkylphenol resins. The crosslinkable resin may be formed from multiple types of monomers, and may be modified at the chain end.

Examples of the resorcinol resins include resorcinol-formaldehyde condensates. Specific examples thereof include Resorcinol from Sumitomo Chemical Co., Ltd. The resorcinol resin may be a modified resorcinol resin obtained by modification. Examples of the modified resorcinol resins include resorcinol resins whose repeating units are partially alkylated. Specific examples thereof include Penacolite resins B-18-S and B-20 available from INDSPEC Chemical Corporation, SUMIKANOL 620 available from Taoka Chemical Co., Ltd., R-6 available from Uniroyal, SRF1501 available from Schenectady Chemicals, Inc., and Arofene 7209 available from Ashland Inc.

Examples of the phenol resins include those obtained by reacting phenol and an aldehyde such as formaldehyde, acetaldehyde or furfural in the presence of an acid or alkali catalyst, and also include modified phenol resins that have been modified using compounds such as cashew oil, tall oil, linseed oil, a variety of animal and vegetable oils, unsaturated fatty acids, rosin, alkylbenzene resins, aniline, and melamine.

Examples of the alkylphenol resins include those obtained by reacting an alkylphenol and an aldehyde mentioned above in the presence of an acid or alkali catalyst, and also include modified alkylphenol resins that have been modified using the above-mentioned compounds such as cashew oil. Specific examples of the alkylphenol resin include cresol resin and octylphenol resin.

The amount of crosslinkable resin (preferably the combined amount of resorcinol resin, phenol resin, and alkylphenol resin) per 100 parts by mass of the rubber component is preferably 2.5 parts by mass or less, more preferably 1.5 parts by mass or less, still more preferably 0.5 parts by mass or less, particularly preferably 0.1 parts by mass or less, and most preferably 0 parts by mass (i.e., substantially no crosslinkable resin is contained).

The rubber composition of the present invention may appropriately contain, in addition to the components mentioned above, additives commonly used in the tire industry, such as a silane coupling agent, stearic acid, and cobalt stearate.

The rubber composition of the present invention can be manufactured by a known method. For example, the rubber composition may be manufactured by kneading the above-mentioned components using a rubber kneader such as an open roll mill or Banbury mixer, followed by vulcanization.

Particularly suitable is a method for manufacturing a rubber composition for a fiber ply cord topping, the method including the steps of preparing a masterbatch containing styrene butadiene rubber and conductive carbon black, and kneading the obtained masterbatch with an isoprene-based rubber and other chemicals, or with the isoprene-based rubber, a rubber other than the isoprene-based rubber, and other chemicals.

When the conductive carbon black is added in the form of a masterbatch, a smaller amount of conductive carbon black can be used to provide high and stable conductivity. Further, the use of such a smaller amount makes it possible to maintain good fuel economy and durability (elongation at break) or improve them. This is presumably because adding the conductive carbon black in the form of a masterbatch allows the conductive carbon black to be more unevenly distributed towards the SBR phase and also improves the dispersibility of the conductive carbon black. In addition, when the conductive carbon black is in the form of a masterbatch, the conductive carbon black, which is easily scattered, can be precisely and easily provided without being scattered. Thus, it is also preferred in terms of productivity, considering the fact that it is difficult to measure the amount to a precision of 0.1 phr with a device for feeding chemicals and filler attached to a commercially available Banbury mixer.

In the masterbatch, the amount of conductive carbon black per 100 parts by mass of SBR is preferably 2 parts by mass or more, more preferably 3 parts by mass or more, and still more preferably 5 parts by mass or more. If the amount is less than 2 parts by mass, the conductive carbon black may not be sufficiently unevenly distributed towards the SBR phase, failing to sufficiently provide the effect of improving conductivity. The amount of conductive carbon black is preferably 12 parts by mass or less, and more preferably 10 parts by mass or less. If the amount is more than 12 parts by mass, the rubber viscosity of the masterbatch may increase, and thus fuel economy, elongation at break, dispersibility of carbon black, and eventually tire durability may decrease.

The masterbatch preferably contains conventional carbon black in addition to the SBR and conductive carbon black. When the masterbatch contains the SBR, conductive carbon black, and conventional carbon black, better effects can then be achieved.

In the masterbatch, the amount of conventional carbon black per 100 parts by mass of SBR is preferably 20 parts by mass or more, and more preferably 30 parts by mass or more. If the amount is less than 20 parts by mass, the resulting conductivity may be poor. The amount of conventional carbon black is preferably 70 parts by mass or less, and more preferably 60 parts by mass or less. If the amount is more than 70 parts by mass, the masterbatch may have a high final viscosity and thus may not be easily mixed with other components when kneaded with these other components in the subsequent kneading step.

The masterbatch preferably contains process oil in addition to the SBR and conductive carbon black. Adding process oil makes it possible to adjust the viscosity of the masterbatch to improve productivity, and to achieve better effects. Moreover, the masterbatch more preferably contains conventional carbon black and process oil in addition to the SBR and conductive carbon black. This can provide better effects.

In the masterbatch, the amount of process oil per 100 parts by mass of SBR is preferably 5 parts by mass or more, and more preferably 7 parts by mass or more. The amount of process oil is preferably 50 parts by mass or less, and more preferably 40 parts by mass or less. When the amount falls within the range mentioned above, the viscosity of the masterbatch can be adjusted within an appropriate range. In addition, the amount of oil derived from the masterbatch in the rubber compound can be set in an appropriate range.

Examples of the process oils include paraffinic oils, naphthenic oils, and aromatic oils.

It is preferred in terms of kneading efficiency that the viscosity of the masterbatch be adjusted to be similar to that of the isoprene-based rubber.

Here, any resin having a softening point of 30°C or less (for example, coumarone-indene resins C10 and C30 available from Rutgers) can be used as a viscosity modifier, without impairing tire properties, by partially or entirely replacing the process oil.

The masterbatch may be prepared, for example, by a method (kneading method) in which the conductive carbon black and SBR, and optionally conventional carbon black and/or process oil are kneaded using a rubber kneader; or a method (latex method) in which the conductive carbon black and optionally conventional carbon black and/or process oil are added to a suspension obtained after the synthesis of SBR, i.e., an SBR latex, and they are mixed by stirring, followed by coagulation and drying. Of these methods, the latex method is preferred.

The (vulcanized) rubber composition of the present invention preferably has a volume resistivity of 1.0 × 10⁸ Ω·cm or less. The volume resistivity is more preferably 1.0 × 10⁷ Ω·cm or less, and still more preferably 1.0 × 10⁶ Ω·cm or less. If the volume resistivity is more than 1.0 × 10⁸ Ω·cm, the electrical resistance of the resulting tire will be increased, causing accumulation of static electricity in a vehicle, leading to the phenomenon of static electricity discharge which can cause various problems such as ignition and electric shock. In contrast, when the volume resistivity is 1.0 × 10⁸ Ω·cm or less, the effect of improving tire conductivity can be obtained. In particular, when the volume resistivity is 1.0 × 10⁶ Ω·cm or less, pneumatic tires having sufficient conductivity can be obtained even when the rubber composition is combined with a sidewall having an electrical resistance of 1 × 10⁹ Ω or more.

In the present invention, the term "volume resistivity" refers to a volume resistance measured at an applied voltage of 1000 V under constant temperature and humidity conditions (temperature: 23°C; relative humidity: 55%) with other conditions as specified in JIS K 6271:2008. In addition, in the present invention, the term "volume resistivity" used alone refers to a volume resistivity measured by the above method.

The rubber composition of the present invention is used as fiber ply cord topping rubbers (topping rubbers) with which fiber ply cords are coated. In particular, the rubber composition can be suitably used as a rubber for a carcass topping, a rubber for a jointless band topping, and a rubber for a tie gum (i.e. insulation).

Examples of the fiber ply cords include cords formed from non-conductive fibers such as polyethylene, nylon, aramid, glass fiber, polyester, rayon, and polyethylene terephthalate. Hybrid cords formed from a plurality of different fibers may also be used. Examples of the hybrid cords include hybrid nylon/aramid cords.

Fiber ply cords are coated with the rubber composition of the present invention, whereby a rubberized fiber ply cord component is formed. Specifically, fiber ply cords are coated with the rubber for a carcass topping and the rubber for a jointless band topping, whereby a carcass and a jointless band, respectively, are formed.

A carcass generally includes polyester cords, whereas a jointless band generally includes nylon cords. Alternatively, the jointless band may include aramid cords or hybrid nylon/aramid cords.

The term "carcass" refers to a component formed from fiber ply cords and a fiber ply cord topping rubber layer. It is also referred to as a case. Specifically, it is a component as illustrated in Fig. 1 of JP 2008-75066 A (which is incorporated by reference in the entirety), for example.

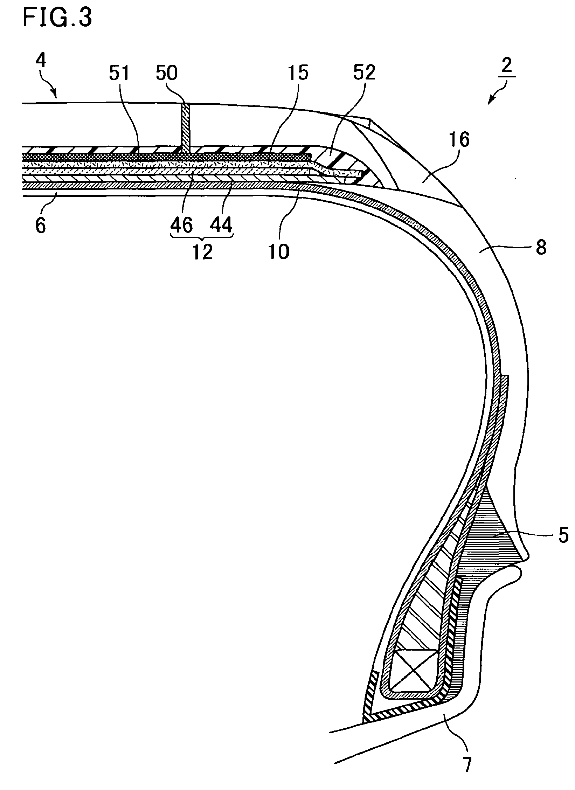

The term "jointless band" refers to a component formed from fiber ply cords and a fiber ply cord topping rubber layer. It is disposed outwardly from a breaker in the radial direction of a tire in order to prevent separation of the breaker from the carcass due to the centrifugal force from rotation of the tire during driving of the vehicle. Specifically, it is a component as illustrated in Fig. 3 of JP 2009-007437 A (which is incorporated by reference in the entirety), for example.

Since a topping rubber forms a very thin rubber coating on fiber ply cords, tire components present around the rubberized fiber ply cord component preferably have good adhesion to fiber ply cords. Thus, the rubber composition of the present invention exhibits good adhesion to rubber compositions for a tread, a sidewall, an inner sidewall layer, a tie gum, and a breaker, which are present around the rubberized fiber ply cord component.

The "inner sidewall layer" refers to an inner layer portion of a sidewall having a multilayer structure. Specifically, it is a component as illustrated in Fig. 1 of JP 2007-106166 A (which is incorporated by reference in the entirety), for example.

The "tie gum" refers to a component disposed inwardly from the carcass in the radial direction of the tire and outwardly from an innerliner in the radial direction of the tire. Specifically, it is a component as illustrated in Fig. 1 of JP 2010-095705 A (which is incorporated by reference in the entirety), for example.

The "breaker" refers to a component disposed outwardly from the carcass in the radial direction of the tire. Specifically, it is a component as illustrated in Fig. 3 of JP 2003-94918 A, Fig. 1 of JP 2006-273934 A, and Fig. 1 of JP 2004-161862 A (which are incorporated by reference in the entirety), for example.

The pneumatic tire according to the present invention preferably includes a sidewall having an electrical resistance of 1 × 10⁹ Ω or more. Since the rubber composition for a fiber ply cord topping of the present invention has a very excellent conductivity, the pneumatic tire formed therefrom can have sufficient conductivity even when the rubber composition is combined with a sidewall having an electrical resistance of 1 × 10⁹ Ω or more.

The pneumatic tire of the present invention can be manufactured by a conventional method using the rubber composition of the present invention.

Specifically, an unvulcanized rubber composition containing the above-described components is made into a sheet. The sheet is compressed onto the upper and lower surfaces of fiber ply cords, and rolled to form a fabric with cords (rubberized fiber ply cord component (the total thickness of rubberized cords is about 0.70 to 2.00 mm; the type of cord, the end count, and the amount of rubber vary depending on the application)). The fabric is assembled with other tire components in a usual manner in a tire building machine to build an unvulcanized tire. The unvulcanized tire is then heat-pressed in a vulcanizer, whereby a tire is obtained. The rubberized fiber ply cord component is preferably a carcass and/or a jointless band.

The pneumatic tire of the present invention can be suitably used as a tire for passenger cars, a tire for light trucks, and a tire for motorcycles.

A cross-sectional view of a part of a pneumatic tire according to an embodiment of the present invention is illustrated in Fig. 3. As illustrated in Fig. 3, a pneumatic tire 2 has a conductive path formed to extend from the road surface to a rim 7 through a conducting rubber 50 embedded in a tread 4 so that it comes into contact with the road surface, an undertread 51, a jointless band 15, a breaker 12, a carcass 10, and a clinch 5, whereby the static electricity generated in the tire can be discharged.

### EXAMPLES

The present invention will be described below in more detail by reference to examples, which are not intended to limit the scope of the present invention.

The chemicals used in the examples and comparative examples are listed below.

### <NR>

- TSR20
- IR2200 available from JSR Corporation

### <SBR>

- SBR1502 (styrene content: 23.5% by mass) available from JSR Corporation

### <BR>

- BR1250H available from ZEON CORPORATION

### <Silica>

- ULTRASIL VN3 (N₂SA: 175 m²/g) available from Degussa

### <Carbon black>

- DIABLACK N330 (DBP: 102 ml/100 g, N₂SA: 78 m²/g) available from Mitsubishi Chemical Corporation
- DIABLACK N660 (DBP: 82 ml/100 g, N₂SA: 28 m²/g) available from Mitsubishi Chemical Corporation
- DIABLACK N220 (DBP: 114 ml/100 g, N₂SA: 114 m²/g) available from Mitsubishi Chemical Corporation

### <Conductive carbon black>

- Lionite (DBP: 378 ml/100 g, N₂SA: 1052 m²/g) available from Lion Corporation
- Ketjenblack EC600J (DBP: 495 ml/100 g, N₂SA: 1400 m²/g) available from Mitsubishi Chemical Corporation
- Ketjenblack EC300J (DBP: 365 ml/100 g, N₂SA: 800 m²/g) available from Mitsubishi Chemical Corporation
- HP160 (DBP: 128 ml/100 g, N₂SA: 165 m²/g) available from Columbian Carbon

### <Softener>

- C5 petroleum resin: Marukarez T-100AS (C5 petroleum resin:
   aliphatic petroleum resin made mainly from olefins and diolefins in C5 fraction obtained by naphtha cracking;
   softening point: 100°C) available from Maruzen Petrochemical Co., Ltd.
- TDAE oil: Vivatec 500 (aromatic oil) available from H&R

### <Vulcanization activator>

- Zinc oxide: zinc oxide #2 available from Mitsui Mining & Smelting Co., Ltd.
- Stearic acid: Tsubaki available from NOF Corporation

### <Vulcanizing agent>

- Improved product of Crystex HS OT 20 (trial product, insoluble sulfur containing 80% by mass of sulfur and 20% by mass of oil) available from Flexsys

### <Vulcanization accelerator>

- Nocceler CZ (N-cyclohexyl-2-benzothiazolylsulfenamide: CBS) available from Ouchi Shinko Chemical Industrial Co., Ltd.
- Nocceler D (1,3-diphenylguanidine: DPG) available from Ouchi Shinko Chemical Industrial Co., Ltd.

### <Crosslinkable resin>

- Sumikanol 507A (modified etherified methylol melamine resin (partial condensate of hexamethylol melamine pentamethyl ether (HMMPME)); active ingredient content: 65% by mass, silica content: 32% by mass, paraffinic oil content: 3% by mass) available from Sumitomo Chemical Co., Ltd.
- Sumikanol 620 (modified resorcinol condensate resin) available from Taoka Chemical Co., Ltd.

### <Antioxidant>

- Antioxidant: purified product of Nocrac 224 (trial product (quinolinic antioxidant); primary amine content: 0.6% by mass) available from Ouchi Shinko Chemical Industrial Co., Ltd.

### <Silane coupling agent>

- Si75 (bis(3-triethoxysilylpropyl)disulfide) available from Degussa

### (Preparation of masterbatch)

### (1) Preparation of masterbatch by latex method

### (1-1) Synthesis of SBR latex

According to the amounts of starting materials shown in Table 1, a pressure-resistant reactor equipped with a stirrer was charged with water, an emulsifier (1), an emulsifier (2), an electrolyte, styrene, butadiene, and a molecular weight regulator. The reactor temperature was set to 5°C, and an aqueous solution containing a radical initiator and SFS dissolved therein and an aqueous solution containing EDTA and a catalyst dissolved therein were added to the reactor to initiate polymerization. Five hours after the initiation of polymerization, a polymerization terminator was added to stop the reaction, whereby an SBR latex was obtained.

The chemicals used for the preparation of the SBR latex are shown below.
Water: distilled water
Emulsifier (1) : rosin acid soap available from Harima Chemicals
Emulsifier (2): fatty acid soap available from Wako Pure Chemical Industries, Ltd.
Electrolyte: sodium phosphate available from Wako Pure Chemical Industries, Ltd.
Styrene: styrene available from Wako Pure Chemical Industries, Ltd.
Butadiene: 1,3-butadiene available from Takachiho Chemical Industrial Co., Ltd.
Molecular weight regulator: tert-dodecylmercaptan available from Wako Pure Chemical Industries, Ltd.
Radical initiator: paramenthane hydroperoxide available from NOF Corporation
SFS: sodium formaldehyde sulfoxylate available from Wako Pure Chemical Industries, Ltd.
EDTA: sodium ethylenediaminetetraacetate available from Wako Pure Chemical Industries, Ltd.
Catalyst: ferric sulfate available from Wako Pure Chemical Industries, Ltd.
Polymerization terminator: N,N'-dimethyldithiocarbamate available from Wako Pure Chemical Industries, Ltd.

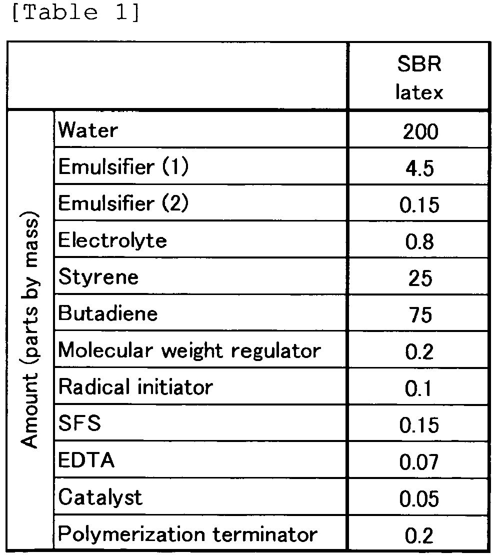

### (1-2) Preparation of masterbatch

The SBR latex, conductive carbon black, conventional carbon black, and process oil were measured and adjusted such that they would have, after drying, a specific mass ratio shown in Table 2. Subsequently, a cylindrical homogenizer was used to stir these components at 8000 rpm for one hour.

Next, a flocculant (1.5 g) was added to the mixture (1000 g) obtained by stirring, and a cylindrical homogenizer was used to stir the mixture at 300 rpm for two minutes.

Next, a coagulant was added gradually while stirring the mixture using a cylindrical homogenizer at 450 rpm and a temperature of 30°C to 35°C, and the pH was adjusted to 6.8 to 7.1, whereby a coagulum was obtained. The stirring time was one hour. The obtained coagulum was repeatedly washed with water (1000 ml).

Next, the coagulum was air-dried for several hours and then further vacuum-dried at 40°C for 12 hours, whereby a masterbatch was obtained.

In masterbatch 1-11, a commercially available NR latex was used instead of the SBR latex.

### (2) Preparation of masterbatch by kneading method

According to the amounts of starting materials shown in Table 2, SBR (SBR 1502 available from JSR Corporation), conductive carbon black, conventional carbon black, and process oil were introduced into a small-size Banbury mixer and kneaded at a discharge temperature of 160°C for five minutes, whereby a kneaded sheet of a masterbatch having a thickness of about 7 mm was obtained.

**[Table 2]**

| | Preparation method | SBR | NR | Conventional carbon black | | Conductive carbon black | | Process oil | |
|---|---|---|---|---|---|---|---|---|---|
| | | Amount (parts by mass) | Amount (parts by mass) | Type | Amount (parts by mass) | Type | Amount (parts by mass) | Type | Amount (parts by mass) |
| Masterbatch 1-1 | Latex method | 100 | - | N330 | 50 | Lionite | 5 | TDAE oil | 25 |
| Masterbatch 1-2 | Latex method | 100 | - | N330 | 50 | Lionite | 10 | TDAE oil | 40 |
| Masterbatch 1-3 | Latex method | 100 | - | N330 | 50 | Lionite | 3 | TDAE oil | 7 |
| Masterbatch 1-4 | Latex method | 100 | - | N330 | 30 | Lionite | 5 | - | - |
| Masterbatch 1-5 | Latex method | 100 | - | N330 | 30 | Lionite | 10 | TDAE oil | 25 |
| Masterbatch 1-6 | Kneading method | 100 | - | N330 | 50 | Lionite | 5 | TDAE oil | 25 |
| Masterbatch 1-7 | Kneading method | 100 | - | N330 | 30 | Lionite | 5 | - | - |
| Masterbatch 1-8 | Kneading method | 100 | - | N330 | 15 | Lionite | 12 | TDAE oil | 13 |
| Masterbatch 1-9 | Latex method | 100 | - | N660 | 50 | Lionite | 5 | TDAE oil | 25 |
| Masterbatch 1-10 | Latex method | 100 | - | N220 | 50 | Lionite | 5 | TDAE oil | 25 |
| Masterbatch 1-11 | Latex method | - | 100 | N330 | 50 | Lionite | 5 | TDAE oil | 25 |
| Masterbatch 2 | Latex method | 100 | - | N330 | 50 | Ketjenblack EC600J | 5 | TDAE oil | 25 |
| Masterbatch 3 | Latex method | 100 | - | N330 | 50 | Ketjenblack EC300J | 5 | TDAE oil | 25 |
| Masterbatch 4 | Latex method | 100 | - | N330 | 50 | HP160 | 5 | TDAE oil | 25 |

### (Examples and Comparative Examples)

According to each of the compositions shown in Tables 3 to 5, the chemicals other than the sulfur and the vulcanization accelerator(s) were kneaded using a 2-L Banbury mixer at a discharge temperature of 160°C for four minutes, whereby a kneaded mixture was obtained. Next, the sulfur and the vulcanization accelerator (s) were added to the kneaded mixture, and they were kneaded using a 2 L-Banbury mixer for three minutes at a maximum rubber temperature of 105°C, whereby an unvulcanized rubber composition was obtained. The unvulcanized rubber composition was press-vulcanized at 170°C for 12 minutes, whereby a vulcanized rubber composition was obtained.

Further, the thus-obtained vulcanized rubber composition was subjected to dry heat aging (air oxidative degradation) in a dry oven at a temperature of 80°C for 96 hours, whereby a dry heat-aged rubber composition was obtained.

Tables 3 to 5 include rows for the NR, SBR, and process oil (softener) that were added in the form of a masterbatch. In regard to the conductive carbon black and conventional carbon black, the amounts added in the form of a masterbatch are each shown in the parenthesis "()" next to the numerical value of the amount directly added in kneading.

The vulcanized rubber compositions (in fresh and dry heat-aged conditions) were evaluated as described below. Tables 3 to 5 show the results.

### <Volume resistivity of rubber composition>

Test pieces (2 mm (thickness) × 15 cm × 15 cm) were prepared from the vulcanized rubber compositions (in fresh conditions), and the volume resistivity of each rubber composition was measured using an instrument for measuring electrical resistance (R8340A, available from ADVANTEST CORPORATION) at an applied voltage of 1000 V under constant temperature and humidity conditions (temperature: 23°C, relative humidity: 55%) with other conditions as specified in JIS K 6271:2008. A smaller value indicates that the rubber composition has a lower volume resistivity and better conductivity and thus can exhibit sufficient conductivity even when the amount of topping rubber is small.

### (Fuel economy test)

The loss tangent, tan δ, of the vulcanized rubber compositions (in fresh conditions) was measured using a viscoelasticity spectrometer VES available from Iwamoto Seisakusho Co., Ltd. at a temperature of 70°C, a frequency of 10 Hz, an initial strain of 10%, and a dynamic strain of 2%. A lower tan δ indicates lower heat build-up and better fuel economy.

### (Tensile test)

Using No. 3 dumbbell test pieces prepared from the vulcanized rubber compositions (in fresh and dry heat-aged conditions), a tensile test was performed at room temperature in accordance with JIS K 6251 "Rubber, vulcanized or thermoplastic - Determination of tensile stress-strain properties" to measure elongation at break, EB, (%). A higher EB indicates better elongation at break (durability).

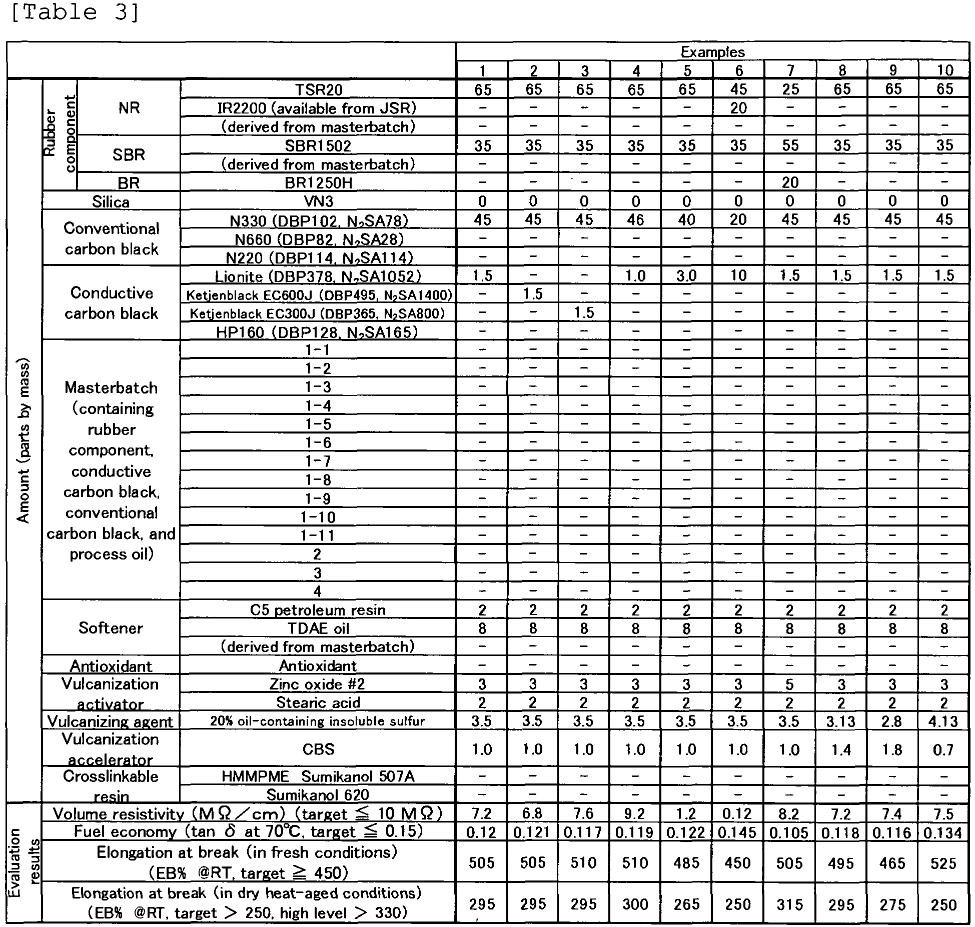

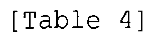

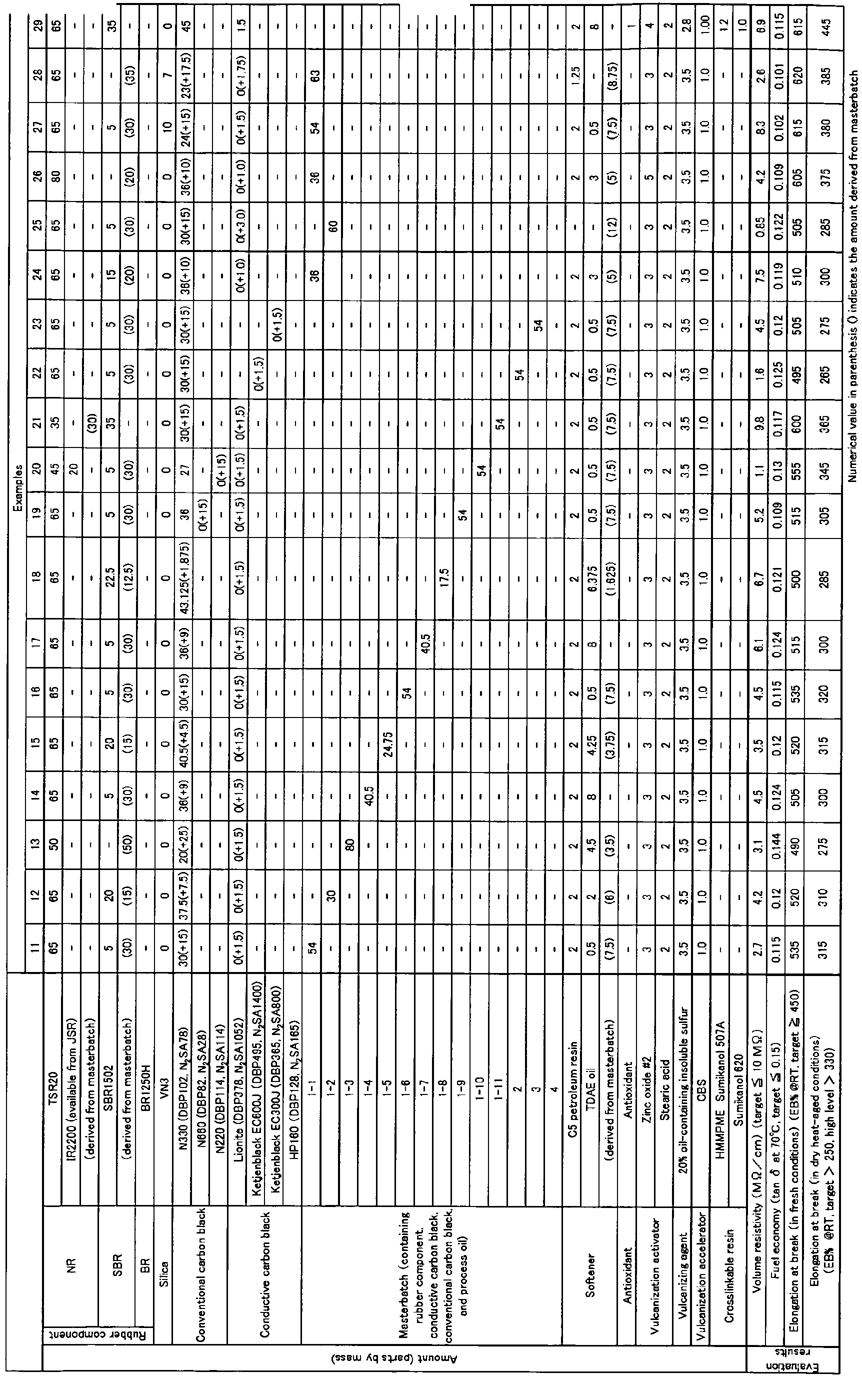

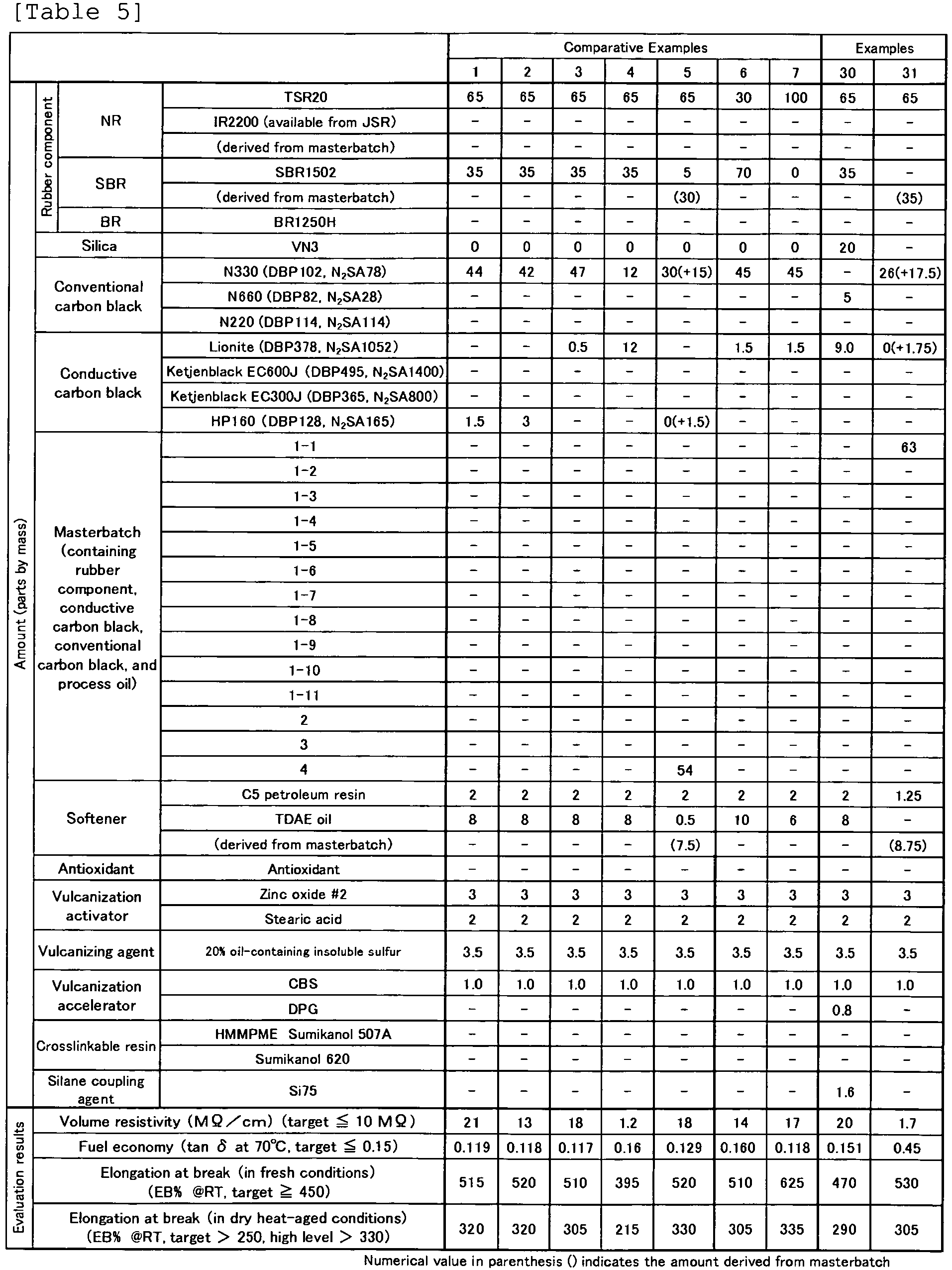

Conductivity, fuel economy, and elongation at break (≈ durability) were good in the examples in which the rubber composition includes a rubber component including an isoprene-based rubber and styrene butadiene rubber, and a conductive carbon black having a dibutyl phthalate oil absorption of 300 ml/100 g or more, wherein the amount of isoprene-based rubber is 20-80% by mass and the amount of styrene butadiene rubber is 20-60% by mass, each based on 100% by mass of the rubber component, and the amount of conductive carbon black is 1-10 parts by mass per 100 parts by mass of the rubber component. This clearly shows that a rubberized fiber ply cord component including the rubber composition for a fiber ply cord topping of the present invention can exhibit sufficient conductivity even when the amount of topping rubber is small, and can thus provide pneumatic tires that are excellent in tire weight, durability, and fuel economy.

### REFERENCE SIGNS LIST

- 2: pneumatic tire
- 4: tread
- 5: clinch
- 6: innerliner
- 7: rim
- 8: sidewall
- 10: carcass
- 12: breaker
- 15: jointless band
- 16: wing
- 44: inner layer
- 46: outer layer
- 50: conducting rubber
- 51: undertread
- 52: base tread

## Claims

1. A pneumatic tire, comprising a rubberized fiber ply cord component formed from a rubber composition for a fiber ply cord topping,
the rubber composition comprising:
a rubber component comprising an isoprene-based rubber and styrene butadiene rubber; and
a conductive carbon black having a dibutyl phthalate oil absorption of 300 ml/100 g or more,
wherein an amount of the isoprene-based rubber is 20 to 80% by mass and an amount of the styrene butadiene rubber is 20 to 60% by mass, each based on 100% by mass of the rubber component, and
an amount of the conductive carbon black is 1 to 10 parts by mass per 100 parts by mass of the rubber component.

2. The pneumatic tire according to claim 1,
wherein the conductive carbon black has a nitrogen adsorption specific surface area (N₂SA) of 900 m²/g or more, and the amount of the conductive carbon black is 1 to 3 parts by mass per 100 parts by mass of the rubber component.

3. The pneumatic tire according to claim 1 or 2,
wherein the conductive carbon black is added in the form of a masterbatch containing the styrene butadiene rubber and the conductive carbon black.

4. The pneumatic tire according to claim 3,
wherein the masterbatch contains conventional carbon black.

5. The pneumatic tire according to claim 3 or 4,
wherein the masterbatch contains process oil.

6. The pneumatic tire according to claim 5,
wherein the masterbatch contains, per 100 parts by mass of the styrene butadiene rubber, 2 to 10 parts by mass of the conductive carbon black and 5 to 50 parts by mass of the process oil when the masterbatch is prepared.

7. The pneumatic tire according to any one of claims 1 to 6,
wherein the rubber composition for a fiber ply cord topping comprises 2.5 to 3.0 parts by mass of sulfur per 100 parts by mass of the rubber component.

8. The pneumatic tire according to any one of claims 1 to 7,
wherein the rubberized fiber ply cord component is at least one of a carcass and a jointless band.

9. The pneumatic tire according to any one of claims 1 to 8,
wherein a sidewall has an electrical resistance of 1 × 10⁹ Ω or more.

10. A method for manufacturing a pneumatic tire comprising a rubberized fiber ply cord component formed from a rubber composition for a fiber ply cord topping,
the rubber composition comprising:
a rubber component comprising an isoprene-based rubber and styrene butadiene rubber; and
a conductive carbon black having a dibutyl phthalate oil absorption of 300 ml/100 g or more,
wherein an amount of the isoprene-based rubber is 20 to 80% by mass and an amount of the styrene butadiene rubber is 20 to 60% by mass, each based on 100% by mass of the rubber component, and
an amount of the conductive carbon black is 1 to 10 parts by mass per 100 parts by mass of the rubber component,
the method comprising the steps of:
preparing a masterbatch containing the styrene butadiene rubber and the conductive carbon black; and
kneading the masterbatch with the isoprene-based rubber and other chemicals, or with the isoprene-based rubber, a rubber other than the isoprene-based rubber, and other chemicals.

## Patentansprüche

1. Luftreifen enthaltend eine Komponente aus gummierten Faserlagencord gebildet aus einer Kautschukzusammensetzung für eine Faserlagencordgummierung,
wobei die Kautschukzusammensetzung enthält:
eine Kautschukkomponente, welche einen Kautschuk auf Isoprenbasis und Styrolbutadienkautschuk enthält, und
einen leitfähigen Ruß mit einer Dibutylphthalatölabsorption von 300 ml/100g oder mehr,
wobei die Menge an Kautschuk auf Isoprenbasis 20 bis 80 Massen-% beträgt und die Menge des Styrolbutadienkautschuks 20 bis 60 Massen-% beträgt, jeweils bezogen auf 100 Massen-% der Kautschukkomponente, und wobei,
die Menge an leitfähigem Ruß 1 bis 10 Massenteile bezogen auf 100 Massenteile der Kautschukkomponente beträgt.

2. Luftreifen nach Anspruch 1, wobei der leitfähige Ruß eine durch Stickstoffabsorption gemessene spezifische Oberfläche (N₂SA) von 900 m²/g oder mehr aufweist und die Menge an leitfähigen Ruß 1 bis 3 Massenteile bezogen auf 100 Massenteile der Kautschukkomponente beträgt.

3. Luftreifen nach Anspruch 1 oder 2, wobei der leitfähige Ruß in der Form einer Mastercharge zugegeben wird, welche den Styrolbutadienkautschuk und den leitfähigen Ruß enthält.

4. Luftreifen nach Anspruch 3, wobei die Mastercharge herkömmlichen Ruß enthält.

5. Luftreifen nach Anspruch 3 oder 4, wobei die Mastercharge Prozessöl erhält.

6. Luftreifen nach Anspruch 5, wobei die Mastercharge bezogen auf 100 Massenteile des Styrolbutadienkautschuks 2 bis 10 Massenteile des leitfähigen Rußes und 5 bis 50 Massenteile des Prozessöles enthält, wenn die Mastercharge hergestellt wird.

7. Luftreifen nach einem der Ansprüche 1 bis 6, wobei die Kautschukzusammensetzung für eine Faserlagencordgummierung 2,5 bis 3,0 Massenteile Schwefel bezogen auf 100 Massenteile der Kautschukkomponente enthält.

8. Luftreifen nach einem der Ansprüche 1 bis 7, wobei die Komponente aus gummierten Faserlagencord wenigstens eines von einer Karkasse und ein endlos gewickeltes Band (jointless belt) ist.

9. Luftreifen nach einem der Ansprüche 1 bis 8, wobei die Seitenwand einen elektrischen Widerstand von 1 × 10⁹ Ω oder mehr aufweist.

10. Verfahren zum Herstellen eines Luftreifens enthaltend eine Komponente aus gummierten Faserlagencord gebildet aus einer Kautschukzusammensetzung für eine Faserlagencordgummierung,
wobei die Kautschukzusammensetzung enthält:
eine Kautschukkomponente, welche einen Kautschuk auf Isoprenbasis und Styrolbutadienkautschuk enthält, und
einen leitfähigen Ruß mit einer Dibutylphthalatölabsorption von 300 ml/100g oder mehr,
wobei die Menge an isoprenbasierendem Kautschuk 20 bis 80 Massen-% und die Menge an Styrolbutadienkautschuk 20 bis 60 Massen-%, jeweils bezogen auf 100 Massen-% der Kautschukkomponente, beträgt und
die Menge an leitfähigem Ruß 1 bis 10 Massenteile bezogen auf 100 Massenteile der Kautschukkomponente beträgt,
wobei das Verfahren die folgenden Schritte umfasst:
Herstellen einer Mastercharge, welche den Styrolbutadienkautschuk und den leitfähigen Ruß enthält, und
Kneten der Mastercharge mit Kautschuk auf Isoprenbasis und anderen Chemikalien oder mit dem Kautschuk auf Isoprenbasis, einem anderen Kautschuk als dem Kautschuk auf Isoprenbasis und anderen Chemikalien.

## Revendications

1. Pneumatique, comprenant un constituant de câble de nappe de fibre caoutchouté formé à partir d'une composition de caoutchouc pour une surface supérieure de câble de nappe de fibre,
la composition de caoutchouc comprenant :
un constituant de caoutchouc comprenant un caoutchouc à base d'isoprène et un caoutchouc de styrène butadiène ; et
un noir de carbone conducteur présentant une absorption d'huile de phtalate de dibutyle de 300 ml/100 g ou supérieure,
dans lequel une quantité du caoutchouc à base d'isoprène est de 20 à 80 % en masse et une quantité du caoutchouc de styrène butadiène est de 20 à 60 % en masse, à chaque fois sur la base de 100 % en masse du constituant de caoutchouc, et
une quantité du noir de carbone conducteur est de 1 à 10 parties en masse pour 100 parties en masse du constituant de caoutchouc.

2. Pneumatique selon la revendication 1,
dans lequel le noir de carbone conducteur présente une surface spécifique d'adsorption d'azote (N₂SA) de 900 m²/g ou supérieure, et la quantité du noir de carbone conducteur est de 1 à 3 parties en masse pour 100 parties en masse du constituant de caoutchouc.

3. Pneumatique selon la revendication 1 ou 2,
dans lequel le noir de carbone conducteur est ajouté dans la forme d'un lot mère contenant le caoutchouc de styrène butadiène et le noir de carbone conducteur.

4. Pneumatique selon la revendication 3,
dans lequel le lot mère contient du noir de carbone classique.

5. Pneumatique selon la revendication 3 ou 4,
dans lequel le lot mère contient une huile plastifiante.

6. Pneumatique selon la revendication 5,
dans lequel le lot mère contient, pour 100 parties en masse du caoutchouc de styrène butadiène, de 2 à 10 parties en masse du noir de carbone conducteur et de 5 à 50 parties en masse de l'huile plastifiante lorsque le lot mère est préparé.

7. Pneumatique selon l'une quelconque des revendications 1 à 6,
dans lequel la composition de caoutchouc pour une surface supérieure de câble de nappe de fibre comprend de 2,5 à 3,0 parties en masse de soufre pour 100 parties en masse du constituant de caoutchouc.

8. Pneumatique selon l'une quelconque des revendications 1 à 7,
dans lequel le constituant de câble de nappe de fibre caoutchouté est au moins un d'une carcasse et d'une bande sans joint.

9. Pneumatique selon l'une quelconque des revendications 1 à 8,
dans lequel une paroi latérale présente une résistance électrique de 1 x 10⁹ Q ou supérieure.

10. Procédé de fabrication d'un pneumatique comprenant un constituant de câble de nappe de fibre caoutchouté formé à partir d'une composition de caoutchouc pour une surface supérieure de câble de nappe de fibre,
la composition de caoutchouc comprenant :
un constituant de caoutchouc comprenant un caoutchouc à base d'isoprène et un caoutchouc de styrène butadiène ; et
un noir de carbone conducteur présentant une absorption d'huile de phtalate de butyle de 300 ml/100 g ou supérieure,
dans lequel une quantité du caoutchouc à base d'isoprène est de 20 à 80 % en masse et une quantité du caoutchouc de styrène butadiène est de 20 à 60 % en masse, à chaque fois sur la base de 100 % en masse du constituant de caoutchouc, et
une quantité du noir de carbone conducteur est de 1 à 10 parties en masse pour 100 parties en masse du constituant de caoutchouc,
le procédé comprenant les étapes consistant :
à préparer un lot mère contenant le caoutchouc de styrène butadiène et le noir de carbone conducteur ; et
à malaxer le lot mère avec le caoutchouc à base d'isoprène et d'autres matières chimiques, ou avec le caoutchouc à base d'isoprène, un caoutchouc différent du caoutchouc à base d'isoprène, et d'autres matières chimiques.
